(19) Europäisches Patentamt
European Patent Office
Office européen des brevets

(11) **EP 4 375 244 A1**

(12) **EUROPÄISCHE PATENTANMELDUNG**

(43) Veröffentlichungstag:
**29.05.2024   Patentblatt 2024/22**

(21) Anmeldenummer: **22212392.9**

(22) Anmeldetag: **09.12.2022**

(51) Internationale Patentklassifikation (IPC):
**C03C 3/097** (2006.01)       **C03C 10/12** (2006.01)

(52) Gemeinsame Patentklassifikation (CPC):
**C03C 3/097; C03C 4/02; C03C 10/0027**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **25.11.2022   DE 102022131283
06.12.2022   DE 202022106825 U**

(71) Anmelder: **SCHOTT AG
55122 Mainz (DE)**

(72) Erfinder:
• **WEISS, Evelin
55131 Mainz (DE)**
• **BOCKMEYER, Matthias
55124 Mainz (DE)**
• **HOCHREIN, Oliver
55130 Mainz (DE)**
• **SCHÖNBERGER, Klaus
55127 Mainz (DE)**

(74) Vertreter: **Schott Corporate IP
Hattenbergstraße 10
55122 Mainz (DE)**

(54) **LITHIUMALUMINIUMSILIKAT-GLASKERAMIK**

(57) Die erfindungsgemäße Lithiumaluminiumsilikat-Glaskeramik weist einen thermischen Ausdehnungskoeffizienten im Bereich von 20°C bis 700°C von -0,5 bis 1,9 ppm/K sowie deren Verwendung. Die Glaskeramik enthält in Gew.-% auf Oxidbasis die folgenden Bestandteile in den angegebenen Mengen: $SiO_2$ 60 - 70, $Al_2O_3$ 17 - 25, $Li_2O$ 1 - <2,9, MgO 0 -<1, $Na_2O$ >0,05 - <0,5 und $K_2O$ >0,05 - <0,6.

EP 4 375 244 A1

**Beschreibung**

Die Erfindung betrifft eine Lithiumaluminiumsilikat-Glaskeramik, welche für die Verwendung als Kochfläche in Kochgeräten geeignet ist und deren Verwendung.

Hintergrund der Erfindung

Glaskeramik-Kochflächen und die dafür verwendeten Glaskeramiken sind seit vielen Jahren bekannt. Dafür werden Lithiumaluminiumsilikat (LAS)-Glaskeramiken verwendet, die entweder Hochquarz-Mischkristall (HQMK), insbesondere für transparente Materialien, oder Keatit-Mischkristall (KMK), insbesondere für transluzente oder opake Materialien, als Hauptkristallphase enthalten. Zur Herstellung solcher Glaskeramiken werden zunächst in für die Glasherstellung üblichen Verfahren Ausgangsgläser, sogenannte Grüngläser, hergestellt. Diese Grüngläser werden durch eine thermische Behandlung, die Keramisierung, in Glaskeramiken umgewandelt.

Die für die Verwendung als Kochfläche wesentliche Eigenschaft dieser Materialien ist, dass sie über eine sehr geringe thermische Ausdehnung in einemm Temperaturbereich von Raumtemperatur bis 700°C verfügen. Die niedrige thermische Ausdehnung bewirkt ihrerseits eine hohe Temperaturwechselbeständigkeit. Die thermische Ausdehnung wird durch die Kombination von Kristallphasen mit negativer thermischer Ausdehnung und einer amorphen Restglasphase mit positiver thermischer Ausdehnung eingestellt. Bei den bisher verwendeten Glaskeramiken wird dafür ein Lithiumanteil von üblicherweise mehr als 3,6 bis 5,0 Gewichtsprozent verwendet.

Aufgrund steigender Rohstoffpreise für Lithium ist es aus wirtschaftlichen Gründen vorteilhaft, den Anteil an Lithium in der Glaskeramik zu minimieren. Da Lithium aber eine der drei Hauptbestandteile in Lithiumaluminiumsilikat-Glaskeramiken ist, kann es nicht ohne Weiteres beliebig reduziert werden. Der Anteil an $Li_2O$ wirkt sich unmittelbar auf zentrale Eigenschaften der Glaskeramik wie beispielsweise die für die Herstellbarkeit wichtige Viskosität in der Schmelze oder die für die Verwendung als Kochfläche wichtige thermische Ausdehnung aus.

Die Preisentwicklung für Lithium ist kein neues Problem. In den vergangenen 20 Jahren hat sich der Preis für Lithium kontinuierlich erhöht. Trotz dieses seit langem bestehenden Bedürfnisses weisen die meisten am Markt erhältlichen Glaskeramiken für Kochflächen ca. 3,8 Gew.-% $Li_2O$ auf. Bisher ist es in der Praxis nicht gelungen, eine Glaskeramik zu finden, die weniger als 3,5% $Li_2O$ enthält und mit den aktuell am Markt erhältlichen Glaskeramiken wettbewerbsfähig wäre.

Glaskeramiken mit einem $Li_2O$-Anteil von weniger als 3,5 Gew.-% sind aus folgenden Dokumenten bekannt: WO 2012/010341 A1, EP 3502069 A1, US 2017050880, US 2020189965, US2020140322, US2021387899, WO2021/224412 A1. Diese Glaskeramiken weisen jedoch verschiedene Nachteile auf, beispielsweise eine reduzierte Temperaturwechselbeständigkeit oder eine schlechte Schmelzbarkeit des Grünglases.

Unter einer transparenten Glaskeramik wird vorliegend wie üblich eine Glaskeramik mit geringer Lichtstreuung verstanden. Die Transmission einer transparenten Glaskeramik kann über absorbierende, also färbende, Bestandteile in einem weiten Bereich eingestellt werden.

Wenn für Kochflächen transparente Glaskeramiken verwendet werden, so werden sie entweder durch Zugabe von Farboxiden volumengefärbt oder mit einer Unterseitenbeschichtung versehen, um die unter der Kochfläche liegenden technischen Installationen optisch zu kaschieren. Für die Volumenfärbung der Glaskeramik können verschiedene Farboxide verwendet werden. Dazu zählen insbesondere $V_2O_5$, $CoO$, $Fe_2O_3$, $Cr_2O_3$, $Nd_2O_3$, $NiO$, $CuO$, $MnO$ und $MoOs$. Jedes dieser Farboxide wirkt sich unterschiedlich auf die Absorption der Glaskeramiken im sichtbaren und infraroten Spektralbereich aus. Die Färbung von Glaskeramiken ist unter anderem in folgenden Schriften beschrieben: WO 11089220 A1, US 8765619, DE 102008050263 B4, DE 102009013127 B4.

Aufgabe der Erfindung

Die Aufgabe der Erfindung besteht in der Bereitstellung einer Lithiumaluminiumsilikat-Glaskeramik, welche gute Schmelzeigenschaften des Grünglases aufweist und kostengünstig ist, ohne dass dadurch Einschränkungen in den Gebrauchseigenschaften entstehen.

Zu den guten Schmelzeigenschaften zählt dabei unter anderem, dass der Verarbeitungspunkt bei einer Temperatur von weniger als 1340 °C, vorzugsweise weniger als 1330 °C, besonders bevorzugt weniger als 1320 °C, liegt. Der Verarbeitungspunkt ist die Temperatur, bei der das Grünglas eine Viskosität von $10^4$ dPa*s aufweist. In der Nähe dieser Temperatur findet die Heißformgebung des Grünglases statt. Je höher die Temperatur bei der Heißformgebung ist, desto aufwändiger ist es, die durch das Glas in die Formgebungsmaschinen eingebrachte Wärme abzuführen. Bei Temperaturen von mehr als 1340 °C lässt sich dies nur erreichen, indem die Wärmemenge dadurch reduziert wird, dass der Durchsatz der Glasmenge reduziert wird. Dies ist jedoch wirtschaftlich nachteilig.

Bei Unterschreiten der oberen Entglasungstemperatur während der Heißformgebung kann es zur unerwünschten spontanen Kristallisierung kommen. Um dies zu verhindern, soll die obere Entglasungstemperatur wenigstens 15 K, vorzugsweise wenigstens 20 K, Besonders bevorzugt wenigstens 30 K niedriger sein, als der Verarbeitungspunkt.

Die Glaskeramik soll insbesondere allen Anforderungen für den Gebrauch als Kochfläche mit allen Arten von Heizelementen genügen. Dazu zählen insbesondere Strahlungs-, Induktions- und Gasheizelemente. Dies erfordert insbesondere eine ausreichend hohe Temperaturwechselbeständigkeit als auch eine hohe Temperatur-Langzeitbeständigkeit.

Zusammenfassung der Erfindung

Die Aufgabe der Erfindung wird gelöst durch den Gegenstand der unabhängigen Ansprüche. Bevorzugte Ausführungen und Weiterbildungen finden sich in den abhängigen Ansprüchen.

Die erfindungsgemäße Lithiumaluminiumsilikat-Glaskeramik weist einen thermischen Ausdehnungskoeffizienten im Bereich von 20°C bis 700°C von -0,5 bis 1,9 ppm/K auf. Die Glaskeramik enthält in Gew.-% auf Oxidbasis die folgenden Bestandteile in den angegebenen Mengen:

$SiO_2$ 60 - 70
$Al_2O_3$ 17 - 25
$Li_2O$ 1 - <2,9
MgO 0-<1
$Na_2O$ >0,05 - <0,5
$K_2O$ >0,05 - <0,6.

Eine Glaskeramik mit einem entsprechenden thermischen Ausdehnungskoeffizienten weist sowohl eine hohe Temperaturwechselbeständigkeit als auch eine hohe thermische Langzeitstabilität auf. Dadurch ist sie für die Verwendung als Kochfläche mit allen Arten von Heizelementen geeignet. Der Ausdehnungskoeffizient beträgt mindestens -0,5 ppm/K. Dabei bedeutet "ppm" "parts per million", also eine relative Größenänderung von $10^{-6}$ bei einer Temperaturänderung von 1 K. Negativere Werte der thermischen Ausdehnung werden vermieden. Bei einer negativen Ausdehnung, also einer Kontraktion, entstehen beim Aufheizen Zugspannungen in der Oberfläche der Glaskeramik. Bei einem Wert von weniger als -0,5 ppm/K können dieses Spannungen bei typischen Betriebstemperaturen von Kochgeräten die mechanische Festigkeit der Kochfläche reduzieren. Eine thermische Ausdehnung von mehr als 1,9 ppm/K wird ebenfalls vermieden. Bei einer Ausdehnung von mehr als 1,9 ppm/K ist nicht sichergestellt, dass die Temperaturwechselbeständigkeit ausreichend hoch ist, um die Glaskeramik in Kochgeräten mit Strahlungsheizelementen einsetzen zu können.

In einer Weiterbildung der Erfindung beträgt der thermische Ausdehnungskoeffizient mindestens -0,4 ppm/K, -0,2 ppm/K, 0,0 ppm/K, 0,2 ppm/K, 0,4 ppm/K, 0,6 ppm/K, 0,8 ppm/K oder sogar 0,9 ppm/K. Außerdem beträgt der thermische Ausdehnungskoeffizient vorzugsweise maximal 1,7 ppm/K, 1,5 ppm/K, 1,3 ppm/K, 1,1 ppm/K, 1,0 ppm/K, 0,8 ppm/K oder sogar nur maximal 0,6 ppm/K.

In einer bevorzugten Ausführungsform der Erfindung beträgt der thermische Ausdehnungskoeffizient der Glaskeramik -0,5 bis 1,0 ppm/K, vorzugsweise -0,1 bis 0,8 ppm/K, besonders bevorzugt 0 bis 0,6 ppm/K. Solche Glaskeramiken sind besonders für Kochflächen in Kochgeräten mit Strahlungsheizelementen geeignet.

In einer weiteren bevorzugten Ausführungsform der Erfindung beträgt der thermische Ausdehnungskoeffizient der Glaskeramik 0,5 bis 1,9 ppm/K, vorzugsweise - 0,7 bis 1,7 ppm/K, besonders bevorzugt 0,9 bis 1,5 ppm/K. Solche Glaskeramiken sind beispielsweise für Kochflächen in Kochgeräten mit Induktionsheizelementen geeignet.

Die erfindungsgemäße Glaskeramik enthält die folgenden Bestandteile in Gew.- %:

$SiO_2$ 60 - 70,
$Al_2O_3$ 17 - 25 und
$Li_2O$ 1 - <2,9.

Die Komponenten $SiO_2$ und $Al_2O_3$ bilden in der Glaskeramik zusammen mit dem $Li_2O$ die Hauptbestandteile der Kristallphase. Zugleich bestimmen sie wesentlich die Glasbildungseigenschaften sowie die Viskosität des Grünglases.

Der $SiO_2$-Gehalt der erfindungsgemäßen Glaskeramik soll maximal 70 Gew.-% betragen, weil diese Komponente die Viskosität des Glases, insbesondere den Verarbeitungspunkt, stark erhöht. Für gutes Einschmelzen der Gläser und für niedrige Formgebungstemperaturen sind höhere Gehalte von $SiO_2$ unwirtschaftlich. Der Mindestgehalt an $SiO_2$ soll 60 Gew.-% betragen, weil dies für die geforderten Eigenschaften, wie z. B. chemische Beständigkeit und Temperaturbelastbarkeit vorteilhaft ist. Bei sehr hohen $SiO_2$-Anteilen von mehr als 70 Gew.-% kann es bei der Keramisierung zur Bildung von Tiefquarz-Kristallen kommen. Dies führt zu einer starken Erhöhung der thermischen Ausdehnung.

Vorzugsweise enthält die Glaskeramik wenigstens 61 Gew.-%, 62 Gew.-%, 63 Gew.-%, 64 Gew.-% oder sogar 65 Gew.-% $SiO_2$. Je mehr $SiO_2$ die Glaskeramik enthält, desto besser ist ihre Temperaturbelastbarkeit und chemische Beständigkeit. Weiterhin enthält sie vorzugsweise höchstens 69 Gew.-%, 68 Gew.-%, 67 Gew.-%, oder sogar nur 66 Gew.-% $SiO_2$. Je weniger $SiO_2$ die Glaskeramik enthält, desto besser ist die Schmelzbarkeit und Verarbeitbarkeit des Grünglases in der Heißformgebung.

Der Gehalt an $Al_2O_3$ der erfindungsgemäßen Glaskeramik liegt im Bereich von 17 bis 25 Gewichtsprozent. Ein höherer $Al_2O_3$-Anteil führt zu Problemen mit der Entglasung und der unerwünschten Bildung von Mullit. Deshalb sollen 25 Gew.-% nicht überschritten werden. Geringere Mengen als 17 Gew.-% an $Al_2O_3$ sind ungünstig für die Bildung der Hochquarz-Mischkristalle und befördern die Bildung unerwünschter Kristallphasen.

Vorzugsweise enthält die Glaskeramik wenigstens 18 Gew.-%, 19 Gew.-% oder sogar 20 Gew.-% $Al_2O_3$. Je mehr $Al_2O_3$ die Glaskeramik enthält, desto besser ist ihre Temperaturbelastbarkeit. Weiterhin enthält sie vorzugsweise höchstens 24 Gew.-%, 23 Gew.-%, 22 Gew.-%, oder sogar nur 21 Gew.-% $Al_2O_3$. Je weniger $Al_2O_3$ die Glaskeramik enthält, desto besser ist die Schmelzbarkeit und Verarbeitbarkeit des Grünglases in der Heißformgebung.

Es hat sich als besonders vorteilhaft für die Schmelzbarkeit des Grünglases erwiesen, wenn die Glaskeramik 17 - <19,0 Gew.-%, vorzugsweise 17,5 - 18,9 Gew.-%, besonders bevorzugt 18 - 18,8 Gew.-% $Al_2O_3$ enthält.

Es hat sich als besonders vorteilhaft für die Temperaturbelastbarkeit der Glaskeramik erwiesen, wenn die Glaskeramik >21,0 - 25 Gew.-%, vorzugsweise 21,5 - 24 Gew.-%, besonders bevorzugt 22,0 - 23 Gew.-% $Al_2O_3$ enthält.

In einer Weiterbildung der Erfindung ist das Verhältnis von $SiO_2$ zu $Al_2O_3$ in Gew.-%, $SiO_2/Al_2O_3$, in der Glaskeramik kleiner als 3,5, bevorzugt kleiner als 3,3, besonders bevorzugt kleiner als 3,15 und größer als 2,4, bevorzugt größer als 3,0, besonders bevorzugt größer als 3,1. In diesem Bereich liegt eine besonders vorteilhafte Kompromiss aus Einschmelzbarkeit der Gemengerohstoffe und Entglasungsstabilität in der Heißformgebung vor.

Der Gehalt an $Li_2O$ der erfindungsgemäßen Glaskeramik liegt im Bereich 1 - <2,9 Gew.-%. Es hat sich überraschenderweise gezeigt, dass mit ein $Li_2O$-Gehalt in diesem Bereich in Kombination mit den übrigen Bestandteilen in den genannten Grenzen eine Glaskeramik mit einer hohen Temperaturwechselbeständigkeit und guten Schmelzbarkeit erzielt werden kann. Da $Li_2O$ einen starken Einfluss auf die thermische Ausdehnung der Glaskeramik hat, wird $Li_2O$ in Kombination mit den übrigen Bestandteilen der erfindungsgemäßen Glaskeramik in den oben genannten Grenzen gewählt, um die für die Erfindung geforderte Temperaturwechselbeständigkeit erzielen zu können. Zusätzlich wirkt sich ein Anteil von mehr als 1 Gew.-% $Li_2O$ positiv auf die Herstellbarkeit der Glaskeramik aus, da dies den elektrischen Widerstand der Glasschmelze reduziert, die Viskosität reduziert und dadurch auch den Verarbeitungspunkt absenkt. Durch eine reduzierte Viskosität der Glasschmelze kann auch die Effizienz der Läuterung verbessert werden. Eine verbesserte Läuterung führt zu weniger Produktionsausschuss aufgrund von Blasenbildung im Grünglas.

In einer bevorzugten Ausführungsform enthält die Glaskeramik wenigstens 1,1 Gew.-%, 1,2 Gew.-%, 1,3 Gew.-%, 1,4 Gew.-%, 1,5 Gew.-%, 1,6 Gew.-%, 1,7 Gew.-% oder sogar 1,8 Gew.-% $Li_2O$. Als Obergrenze enthält die Glaskeramik vorzugsweise höchstens 2,8 Gew.-%, 2,7 Gew.-%, 2,6 Gew.-% oder sogar 2,5 Gew.-% $Li_2O$. Besonders bevorzugt enthält die Glaskeramik 1,1 - 2,8 Gew.-% oder 1,2 - 2,7 Gew.-% oder 1,3 - 2,6 Gew.-% oder 1,4 - 2,5 Gew.-% Li2O. In diesen engeren Grenzen kann in Kombination mit den anderen Bestandteilen eine Glaskeramik mit besonders hoher Temperaturwechselbeständigkeit erhalten werden.

Als Quelle für das Lithium werden in der Regel aus Kostengründen natürliche Mineral-Rohstoffe wie Spodumen oder Petalit verwendet oder alternativ synthetisch hergestelltes $Li_2CO_3$. Die natürlichen Mineral-Rohstoffe enthalten jedoch Verunreinigungen, die einen unerwünschten Einfluss beispielsweise auf optische Eigenschaften der Glaskeramik haben können. Zusätzlich kann die Menge an Verunreinigungen bei natürlichen Rohstoffen zwischen Lieferungen variieren, was die Einstellung der gewünschten Eigenschaften der Glaskeramik erschwert. Auch aus diesem Grund ist es vorteilhaft, die Menge an $Li_2O$ in der Glaskeramik so weit wie möglich zu reduzieren.

In einer bevorzugten Ausführungsform enthält die Glaskeramik Hochquarz-Mischkristall als Hauptkristallphase. "Hauptkristallphase" bedeutet, dass die Glaskeramik in Volumenanteilen mehr Hochquarz-Mischkristall als Hochquarz-Mischkristall enthält. In einer Weiterbildung dieser Ausführungsform enthält die Glaskeramik <10 Vol.-%, bevorzugt < 5 Vol.-%, besonders bevorzugt < 3 Vol-% Hochquarz-Mischkristall. Die Angabe Vol.-% bezieht sich dabei auf das Volumen der Glaskeramik, vorzugsweise auf das Volumen der Kristallphase. Die Volumenanteile werden mittels Rietveld-Analyse aus Röntgenbeugungsspektren bestimmt.

Hochquarz-Mischkristalle haben allgemein eine höhere thermische Ausdehnung als Hochquarz-Mischkristalle. Deshalb ist ein hoher Anteil Hochquarz-Mischkristalle bei einem gleichzeitig niedrigen Anteil an Hochquarz-Mischkristallen besonders vorteilhaft für den thermischen Ausdehnungskoeffizienten der Glaskeramik. Er verbessert somit die Temperaturwechselbeständigkeit der Glaskeramik.

Neben den zuvor genannten Mengen an $SiO_2$, $Al_2O_3$ und $Li_2O$ enthält die erfindungsgemäße Glaskeramik 0 - <1 Gew.-% MgO. Da MgO zu einer Erhöhung der thermischen Ausdehnung der Glaskeramik führt, wird die Menge an MgO in der Glaskeramik auf <1 Gew.-% begrenzt. Vorzugsweise enthält die Glaskeramik <0,8 Gew.-%, <0,7 Gew.-%, <0,6 Gew.-%, <0,5 Gew.-%, <0,4 Gew.-% oder sogar nur <0,3 Gew.-% MgO.

In vorteilhaften Ausgestaltungen der Erfindung kann es bevorzugt sein, wenn die Glaskeramik geringe Mengen an MgO enthält. Geringe Mengen MgO können eingesetzt werden, um den Verarbeitungspunkt und die obere Entglasungstemperatur zu reduzieren. Die Glaskeramik kann bevorzugt wenigstens 0,05 Gew.-% und besonders bevorzugt wenigstens 0,1 Gew.-% MgO enthalten. MgO kann auch als Verunreinigung von Rohstoffen in die Glaskeramik eingebracht werden. In einer besonders bevorzugten Ausführungsform enthält die Glaskeramik aus den genannten Gründen 0 - <0,8 Gew.-%, 0 - <0,6 Gew.-%, 0 - <0,5 Gew.-%, 0,05 - <0,4 Gew.-% oder 0,1 - <0,3 Gew.-% MgO.

Die Zugabe der Alkalien $Na_2O$ und $K_2O$ verbessert die Schmelzbarkeit und das Entglasungsverhalten bei der Formgebung des Glases. Beide Bestandteile können die elektrische Leitfähigkeit der Schmelze erhöhen. Dies erleichtert die Einkopplung von Energie durch elektrische Heizungen in der Schmelzwanne. Die Gehalte werden jedoch begrenzt, weil diese Komponenten nicht in die Kristallphasen eingebaut werden, sondern im Wesentlichen in der Restglasphase der Glaskeramik verbleiben. Zu hohe Gehalte beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Deshalb enthält die erfindungsgemäße Glaskeramik >0,05 - <0,5 Gew.-% $Na_2O$ und >0,05 - <0,6 Gew.-% $K_2O$.

In einer bevorzugten Weiterbildung enthält die Glaskeramik 0,1 - 0,4 Gew.-%, vorzugsweise 0,2 - 0,3 Gew.-% $Na_2O$. In einer weiteren bevorzugten Weiterbildung enthält die Glaskeramik 0,1 - 0,5 Gew.-%, vorzugsweise 0,2 - 0,4 Gew.-% $K_2O$.

Die Summe der Alkalien $Na_2O + K_2O$ beträgt in einer Weiterbildung der Erfindung in Kombination mit den übrigen Bestandteilen der Glaskeramik vorzugsweise wenigstens 0,2 Gew.-% und höchstens 1 Gew.-%. Besonders bevorzugt beträgt die Summe wenigstens 0,3 Gew.-% oder wenigstens 0,4 Gew.-% oder wenigstens 0,5 Gew.-% und höchstens 1,0 Gew.-% oder höchstens 0,9 Gew.-% oder höchstens 0,8 Gew.-% oder höchstens 0,7 Gew.-% oder sogar höchstens 0,6 Gew.-%. In diesen Mengen lässt sich für die erfindungsgemäßen Glaskeramiken ein besonders guter Kompromiss aus Verbesserung der Schmelzbarkeit und Entglasung ohne Verschlechterung der Keramisierungsgeschwindigkeit erzielen.

In einer Weiterbildung der Erfindung enthält die Glaskeramik weniger MgO als $K_2O$ und/oder weniger MgO als $Na_2O$.

Sowohl MgO als auch $K_2O$ und $Na_2O$ wirken sich positiv auf die elektrische Leitfähigkeit der Schmelze aus. Da Kalium und Natrium als Ionen jedoch mobiler sind als Magnesium haben sie einen stärkeren Einfluss auf die Leitfähigkeit. Gleichzeitig hat das MgO einen stärker erhöhenden Einfluss auf die thermische Ausdehnung der Glaskeramik als $K_2O$ und $Na_2O$. Deshalb ist es vorteilhaft, wenn die Glaskeramik mehr $K_2O$ und/oder mehr $Na_2O$ als MgO enthält.

Über das Verhältnis von $K_2O$ zu $Na_2O$, $K_2O/Na_2O$, kann eine Feinabstimmung von Schmelzbarkeit und thermischer Ausdehnung vorgenommen werden. $Na_2O$ verbessert das Einschmelzen und reduziert in den vorliegenden Zusammensetzungen die Viskosität der Glasschmelze etwas stärker als $K_2O$, erhöht aber die thermische Ausdehnung der Glaskeramik etwas stärker.

In einer ersten bevorzugten Ausführungsform der Erfindung liegt das Verhältnis von $K_2O$ zu $Na_2O$, $K_2O/Na_2O$ in Gew.-% im Bereich 0,1 - 2, vorzugsweise 0,5 - 1,5, besonders bevorzugt 0,7 - 1,3. In diesem Bereich sind die oben genannten Eigenschaften besonders ausgeglichen.

In einer zweiten bevorzugten Ausführungsform der Erfindung liegt das Verhältnis von $K_2O$ zu $Na_2O$ in Gew.-% im Bereich 0,1 - <1, vorzugsweise 0,2 - 0,9, besonders bevorzugt 0,3 - 0,8. Diese Ausführungsform weist eine verbesserte Schmelzbarkeit und Viskosität auf. Dies kann insbesondere dann vorteilhaft sein, wenn die Glaskeramik die übrigen Komponenten in einer Kombination erhält, die tendenziell etwas schlechter zu Schmelzen ist oder die eine etwas höhere Viskosität aufweist.

In einer dritten bevorzugten Ausführungsform der Erfindung liegt das Verhältnis von $K_2O$ zu $Na_2O$ in Gew.-% im Bereich 1 - 2, vorzugsweise 1,1 - 1,9, besonders bevorzugt 1,2 - 1,8. Diese Ausführungsform weist eine verbesserte thermische Ausdehnung auf. Dies kann insbesondere dann vorteilhaft sein, wenn die Glaskeramik die übrigen Komponenten in einer Kombination erhält, die eine tendenziell etwas höhere thermische Ausdehnung aufweist.

In einer Weiterbildung der Erfindung enthält die Glaskeramik >1,7 - 6,0 Gew.-% ZnO. ZnO kann insbesondere in Kombination mit hohen Mengen an $Al_2O_3$ zur unerwünschten Bildung von Gahnit-Kristallen führen. Deshalb wird die Menge in der erfindungsgemäßen Glaskeramik auf 6,0 Gew.-% begrenzt. Zusätzlich hat sich empirisch gezeigt, dass Glaskeramiken mit sehr hohen Mengen an ZnO zur Ausbildung von unerwünschten Kristallen an der Oberfläche der Glaskeramik neigen. Deshalb wird die Menge an ZnO vorzugsweise auf Mengen von höchstens 5,5 Gew.-%, 5,0 Gew.-%, 4,5 Gew.-% oder sogar 4,0 Gew.-% begrenzt.

ZnO reduziert in den erfindungsgemäßen Glaskeramiken den Verarbeitungspunkt und die obere Entglasungstemperatur. Die Glaskeramik enthält deshalb vorzugsweise wenigstens >1,7 Gew.-%, 2,0 Gew.-%, 2,5 Gew.-% oder sogar wenigstens 3,0 Gew.-% ZnO. Mit einem Anteil ZnO in diesen Bereichen wird die Temperaturwechselbeständigkeit der Glaskeramik besonders verbessert.

In einer bevorzugten Ausführungsform enthält die Glaskeramik aus den oben genannten Gründen >1,7 - 6,0 Gew.-% oder 2,0 - 5,5 Gew.-% oder 2,5 - 5,0 Gew.-% oder sogar 3,0 - 4,0 Gew.-% ZnO.

Es hat sich überraschenderweise gezeigt, dass die Erfindung weitergebildet werden kann, indem die Mengen an $Li_2O$ und ZnO so gewählt werden, dass die Differenz zwischen $Li_2O$ und ZnO $\pm0,5$ Gew.-% oder $\pm0,3$ Gew.-%oder sogar $\pm0,2$ Gew.-% beträgt. Glaskeramiken, die diese Bedingung erfüllen, weisen sich durch eine gute Schmelzbarkeit bei gleichzeitig stabiler Heißformgebung ohne Probleme mit unerwünschter Entglasung aus.

In einer Weiterbildung der Erfindung enthält die Glaskeramik 0 - 4 Gew.- % BaO. BaO bewirkt, wie auch $Li_2O$, eine Absenkung der Viskosität der Glasschmelze und somit eine Reduzierung des Verarbeitungspunktes. Um die Schmelzbarkeit des Grünglases zu verbessern, ist es vorteilhaft, wenn die Glaskeramik in Kombination mit den oben genannten Mengen an $Li_2O$ wenigstens 0,1 Gew.-%, vorzugsweise wenigstens 0,3 Gew.-%, 0,6 Gew.-%, 0,9 Gew.-% oder sogar 1 Gew.- % BaO enthält. BaO trägt in der Glaskeramik auch maßgeblich zur Verbesserung des Entglasungsverhaltens bei der Heißformgebung des Grünglases bei.

Es hat sich jedoch gezeigt, dass sich das BaO negativ auf die Ausbildung der Kristallphase während der Keramisierung auswirken kann. Um zu verhindern, dass lange Keramisierungszeiten benötigt werden, wird deshalb die Menge an BaO auf maximal 4 Gew.-%, vorzugsweise maximal 3,5 Gew.-%, besonders bevorzugt 3,0 Gew.-% oder sogar auf maximal 2,7 Gew.-% beschränkt. Je weniger BaO die Glaskeramik enthält, desto schneller läuft die Keramisierung ab.

In einer weiteren Weiterbildung der Erfindung enthält die Glaskeramik 0,1 - <1,0 Gew.-% $SnO_2$. 0,1 Gew.-% $SnO_2$ ist in Kombination mit den anderen Bestandteilen der erfindungsgemäßen Glaskeramik vorteilhaft, um eine für die erfindungsgemäßen Eigenschaften ausreichende Keimbildung zu gewährleisten. Die Menge von <1,0 Gew.-% soll aber nicht überschritten werden. Höhere Gehalte führen zur Kristallisation von Sn-haltigen Kristallphasen an den Kontaktmaterialien (z. B. Pt/Rh) bei der Formgebung und sind zu vermeiden. Vorzugsweise enthält die Glaskeramik 0,1 - <1,0 Gew.-% $SnO_2$, vorzugsweise 0,15 - 0,8 Gew.-%, besonders bevorzugt 0,2 - 0,6 Gew.-% $SnO_2$.

In einer weiteren Weiterbildung der Erfindung kann die Glaskeramik 0,1 - 0,8 Gew.-%, bevorzugt 0,2 - 0,7, besonders bevorzugt 0,3 - 0,6 Gew.-% $SnO_2$ enthalten. In diesen Mengen kann das $SnO_2$ die Läuterung des Grünglases unterstützen. Eine Glaskeramik mit diesen Mengen an $SnO_2$ zeichnet sich durch besonders wenige Defekte aufgrund von eingeschlossenen Gasblasen aus.

In einer weiteren Weiterbildung der Erfindung kann die Glaskeramik 0 - 0,8 Gew.-%, bevorzugt 0,1 - 0,6 Gew.-%, besonders bevorzugt 0,2 - 0,4 Gew.-% $CeO_2$ enthalten. Das $CeO_2$ kann in Kombination mit $SnO_2$ ebenfalls die Läuterung unterstützen und Blasenqualität verbessern.

In einer Weiterbildung der Erfindung enthält die Glaskeramik $TiO_2$. $TiO_2$ trägt zusammen mit $SnO_2$ zur Keimbildung bei. Die Menge an $TiO_2$ wird in Kombination mit den erfindungsgemäßen Bestandteilen der Glaskeramik auf Werte von <4,2 Gew.-% begrenzt. $TiO_2$ kann in größeren Mengen zu einer Entglasung bei der Heißformgebung führen. Zusätzlich kann es zu einer unerwünschten Erhöhung des Brechungsindexes der Restglasphase führen. Vorzugsweise enthält die Glaskeramik wenigstens 1 Gew.-%, 1,5 Gew.-%, 2,0 Gew.-%, >2,5 Gew.-% oder sogar >3,0 Gew.-% $TiO_2$. Gleichzeitig enthält sie vorzugsweise höchstens 4,1 Gew.-%, 4,0 Gew.-%, 3,8 Gew.-% 3,6 Gew.-% oder sogar nur 3,4 Gew.-% $TiO_2$. Bei höheren Anteilen an $TiO_2$ läuft die Keimbildung schneller ab. Dadurch kann die Keramisierungszeit der Glaskeramik reduziert werden. Niedriger Anteile bewirken eine Stabilisierung des Keramisierungsprozesses und beugen einer unbeabsichtigten Entglasung während der Heißformgebung des Grünglases vor.

In einer bevorzugten Ausführungsform kann die Glaskeramik aus den oben genannten Gründen 1,0 - <4,2 Gew.-%, bevorzugt 2,0 - 4,1 Gew.-%, besonders bevorzugt >3,0 - 4,0 % $TiO_2$ enthalten.

In einer weiteren Weiterbildung der Erfindung enthält die Glaskeramik 1,0 - 4,0 Gew.-% $ZrO_2$. $ZrO_2$ und $SnO_2$ fungieren in der Glaskeramik unter anderem als Keimbildner und wirken als solche eng zusammen. Ein Gehalt an 1,0 Gew.-% $ZrO_2$ und ist insbesondere in Kombination mit $SnO_2$ und $TiO_2$ vorteilhaft, um die Keimbildung zu verbessern.

Die Menge an $ZrO_2$ wird auf Werte von 4,0 Gew.-% begrenzt, da $ZrO_2$ die Viskosität der Glasschmelze, also auch den Verarbeitungspunkt, erhöht. Zusätzlich kann $ZrO_2$ zur Entglasung bei der Heißformgebung führen. Dabei kann es zur unerwünschten Bildung von Baddeleyit kommen. Vorzugsweise enthält die Glaskeramik wenigstens >1,3 Gew.-%, besonders bevorzugt >1,7 Gew.-% $ZrO_2$. Weiter enthält sie vorzugsweise höchstens 3,9 Gew.-%, 3,8 Gew.-%, 3,2 Gew.-%, 3,0 Gew.-% oder sogar nur 2,0 Gew.-% $ZrO_2$. In diesen Mengen lässt sich ein besonders guter Kompromiss aus positivem Beitrag zur Keimbildung bei noch akzeptabler Verschlechterung von Schmelzbarkeit und Heißformgebung erzielen.

In einer Weiterbildung der Erfindung enthält die Glaskeramik aus den oben genannten Gründen 1,0 - 4,0 Gew.-%, vorzugsweise >1,3 - 3,9 Gew.-%, besonders bevorzugt >1,7 - 3,8 Gew.-% $ZrO_2$

Bei der Herstellung von Glaskeramiken werden häufig $As_2O_3$ und $Sb_2O_3$ als Läutermittel eingesetzt. In den erfindungsgemäßen Glaskeramiken haben sich diese Komponenten jedoch überraschenderweise als nachteilig für die Entglasungsstabilität erwiesen. Deshalb ist in einer Weiterbildung der Erfindung die Menge von $As_2O_3$ und $Sb_2O_3$ vorzugsweise jeweils auf weniger als 0,1 Gew.-% beschränkt. Besonders bevorzugt enthält die Glaskeramik jeweils weniger als 0,09 Gew.-%, 0,08 Gew.-%, 0,07 Gew.-%, 0,06 Gew.-% oder sogar weniger als 0,05 Gew.-% $As_2O_3$ und $Sb_2$. Besonders bevorzugt ist die Glaskeramik bis auf unvermeidliche Spuren frei von $As_2O_3$ und $Sb_2O_3$.

$As_2O_3$ und $Sb_2O_3$ können jedoch als Verunreinigung in der Glaskeramik vorkommen, insbesondere, wenn zur Herstellung der Glaskeramik Scherben zum Einsatz kommen, die $As_2O_3$ und $Sb_2O_3$ enthalten. Dies ist insbesondere der Fall, wenn Scherben von Kochflächen aus einem Recyclingkreislauf verwendet werden. Aus Gründen des Umweltschutzes und der Nachhaltigkeit ist es vorteilhaft, Scherben aus einem Recyclingkreislauf als Rohstoff einzusetzen.

Deshalb weisen die Glaskeramiken vorzugsweise jeweils wenigstens 0,01 Gew.-%, 0,02 Gew.-%, 0,03 Gew.-% oder sogar wenigstens 0,04 Gew.-% $As_2O_3$ und/oder $Sb_2O_3$ auf. Wenn $As_2O_3$ und $Sb_2O_3$ zusammen enthalten sind, können Sie jeweils in den genannten Mengen vorliegen.

$As_2O_3$ und $Sb_2O_3$ können jedoch zur Läuterung des Grünglases beitragen und so die Blasenqualität verbessern. Zu diesem Zweck kann die Glaskeramik in einer Weiterbildung der Erfindung 0,1 - 1,8 Gew.-%, 0,2 - 1,7 Gew.-%, 0,3 - 1,6 Gew.-% oder sogar 0,4 - 1,5 Gew.-% $As_2O_3$ enthalten. Alternativ kann die Glaskeramik 0,5 - 2,1 Gew.-%, 0,6 - 2,0 Gew.-%, 0,7 - 1,9 Gew.-%, 0,8 - 1,8 Gew.- %, 0,9 - 1,7 Gew.-% oder sogar 1,0 - 1,6 Gew.-% $As_2O_3$ enthalten.

Die Zugabe der Erdalkalien CaO und SrO sowie von $B_2O_3$ verbessert die Schmelzbarkeit und das Entglasungsverhalten bei der Formgebung des Glases. Insbesondere kann CaO in der Glaskeramik enthalten sein, um den Verarbeitungspunkt und die obere Entglasungstemperatur zu reduzieren. Die Gehalte werden jedoch begrenzt, weil diese Komponenten nicht in die Kristallphasen eingebaut werden, sondern im Wesentlichen in der Restglasphase der Glaskeramik verbleiben. Zu hohe Gehalte beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Deshalb kann die Glaskeramik jede dieser Komponenten in Mengen von 0 - 2 Gew.-% enthalten.

In einer Weiterbildung der Erfindung enthält die Glaskeramik 0 - <1 Gew.-% $P_2O_5$. Das $P_2O_5$ wirkt sich positiv auf die Entglasungsstabilität des Grünglases aus. Größere Mengen verringern aber die Keramisierungsgeschwindigkeit und wirken sich negativ auf die Säurebeständigkeit der Glaskeramik aus. Deshalb ist die Menge an $P_2O_5$ auf maximal <1 Gew.-%, vorzugsweise maximal 0,9 Gew.-%, besonders bevorzugt auf maximal 0,8 Gew.-% begrenzt. Zur Verbesserung der Entglasungsstabilität kann es vorteilhaft sein, wenn die Glaskeramik wenigstens 0,01 Gew.-%, bevorzugt wenigstens 0,05 Gew.-%, besonders bevorzugt wenigstens 0,1 Gew.-% $P_2O_5$ enthält.

In einer Weiterbildung der Erfindung kann es vorteilhaft sein, wenn die Glaskeramik $Cl^-$ enthält. Es hat sich gezeigt, dass die Zugabe von $Cl^-$ in bestimmten Mengen zu einer verbesserten Blasenqualität des Grünglases und somit auch der Glaskeramik führt. In Kombination mit den übrigen Bestandteilen hat es sich als besonders vorteilhaft erwiesen, wenn die Glaskeramik 0,003 - 0,1 Gew.-%, bevorzugt 0,005 - 0,03 Gew.-%, besonders bevorzugt 0,007 - 0,02 Gew.-% $Cl^-$ enthält. Geringere Mengen als 30 ppm zeigen keinen ausreichenden Einfluss auf die Blasenqualität. Mengen von mehr als 1000 ppm sollen vermieden werden, da ein Teil des zugesetzten Chlorids mit anderen Komponenten des Gemenges sowie mit Prozessabgasen reagieren kann. Dabei kann sich beispielsweise HCl bilden, was zu korrosiven Schäden an der Wanne führen kann. Weiterhin ist die Abdampfung von Alkalichloriden und Erdalkalichloriden unerwünscht. Die Menge an $Cl^-$ in der Glaskeramik kann beispielsweise durch Zugabe von NaCl zum Gemenge eingestellt werden.

Neben diesen Bestandteilen kann die Glaskeramik in einer Weiterbildung der Erfindung auch färbende Bestandteile enthalten. Als färbende Bestandteile können beispielsweise $V_2O_5$, CoO, $Fe_2O_3$, $Cr_2O_3$, $Nd_2O_3$, NiO, CuO, MnO oder MoOs einzeln oder in Kombination enthalten sein. Die genaue Wahl der Art und Menge der färbenden Komponenten hängt von den zu erzielenden optischen Eigenschaften ab.

Bei der Färbung von Glaskeramiken handelt es sich um einen komplexen, nichtlinearen Prozess. Viele der in der Glaskeramik enthaltenen Komponenten können einen Einfluss darauf haben, wie stark die färbenden Bestandteile Licht absorbieren. Der Fachmann wird deshalb die Menge der färbenden Bestandteile an die jeweilige Grundzusammensetzung der Glaskeramik anpassen, um die gewünschten optischen Eigenschaften zu erhalten.

In Bezug auf die Färbung erfindungsgemäßer Glaskeramiken mittels $V_2O_5$ als Hauptfärbemittel hat sich dabei beispielsweise Folgendes gezeigt. Zur Absenkung der Transmission auf einen gewünschten Wert wird mehr $V_2O_5$ eingesetzt als bei vergleichbaren Glaskeramiken mit höherem $Li_2O$-Anteil. Die Reduzierung des $Li_2O$ bewirkt also, dass das $V_2O_5$ in der Glaskeramik schwächer absorbiert. Ähnliche, teilweise auch gegenläufige Korrelationen gibt es auch mit anderen Komponenten der Grundzusammensetzung.

$V_2O_5$ färbt in Glaskeramiken generell schon in geringen Mengen sehr intensiv. Mittels $V_2O_5$ eingefärbte Glaskeramiken weisen eine relativ niedrige Transmission im blauen und grünen Spektralbereich und eine relativ hohe Transmission im roten Spektralbereich auf. Vorzugsweise enthält die Glaskeramik 0 bis 0,1 Gew.-% $V_2O_5$. Besonders bevorzugt enthält sie >0,002 bis 0,08 Gew.-%, >0,003 bis 0,07 Gew.-%, >0,004 bis 0,06 Gew.-%, >0,005 bis 0,05 Gew.-% oder sogar >0,01 - 0,04 Gew.-% $V_2O_5$. Mit diesen Mengen an $V_2O_5$ ist es möglich, den Lichttransmissionsgrad der Glaskeramik bezogen auf eine Dicke von 4 mm im Bereich 0,1 bis 80 % einzustellen.

In einer besonders bevorzugten Weiterbildung der zuvor genannten Ausführungsform beträgt das Verhältnis $V_2O_5/Li_2O$ 0,005 - 0,06, vorzugsweise 0,007 - 0,055, besonders bevorzugt 0,01 - 0,05. Ohne Beschränkung der Allgemeinheit wird vermutet, dass die Färbewirkung des $V_2O_5$ von der Mikrostruktur der Glaskeramik abhängt. Die erfindungsgemäßen Glaskeramiken weisen aufgrund des niedrigen $Li_2O$-Anteils einen relativ geringen Kristallphasenanteil auf bei gleichzeitig geringer Kristallitgröße. Es hat sich gezeigt, dass bei Einstellung des Verhältnisses von $V_2O_5$ zu $Li_2O$ in den oben genannten Grenzen eine besonders effektive Färbung möglich ist. Bei Einstellung des Verhältnisses in diesem Bereich kann ein spektraler Transmissionsgrad bei einer Wellenlänge von 630 nm bezogen auf eine Dicke von 4 mm im Bereich 0,5 - 15 %, vorzugsweise 1-13 %, besonders bevorzugt 2-10 % erreicht werden. Bei diesen Transmissionsgraden können bei Verwendung der Glaskeramik als Kochfläche handelsübliche rote Leuchtanzeigen verwendet werden.

Mittels $MoO_3$ ist es möglich, Glaskeramiken besonders farbneutral einzufärben. Dies hat den Vorteil, dass in Kochgeräten Leuchtanzeigen mit weißer Lichtfarbe verwendet werden können, ohne dass die Farbe des Lichts der Anzeige beim Durchtritt durch die Glaskeramik verändert wird. Vorzugsweise enthält die Glaskeramik 0 bis 0,5 Gew.-% MoOs. Besonders bevorzugt enthält sie >0,002 bis 0,4 Gew.-%, >0,003 bis 0,3 Gew.-%, >0,004 bis 0,2 Gew.-%, >0,005 bis 0,15 Gew.- % oder sogar >0,01 - 0,1 Gew.-% MoOs. Mit diesen Mengen an MoOs ist es möglich, den Lichttransmissionsgrad der Glaskeramik bezogen auf eine Dicke von 4 mm im Bereich 0,1 bis 80 % einzustellen. Gleichzeitig ist eine farblich unverfälschte Anzeige weißer Leuchtanzeigen möglich.

In einer besonders bevorzugten Weiterbildung der zuvor genannten Ausführungsform beträgt das Verhältnis von $MoO_3/Li_2O$ 0,015 - 0,1, vorzugsweise 0,02 - 0,08, besonders bevorzugt 0,025 - 0,07. Bei Einstellung des Verhältnisses in diesem Bereich kann ein Lichttransmissionsgrad bezogen auf eine Dicke von 4 mm im Bereich 0,5 - 4 %, vorzugsweise 0,8 - 3,5 %, besonders bevorzugt 0,7 - 3,3 % und ganz besonders bevorzugt 1,0 - 3,0 % erreicht werden. Bei diesen Transmissionsgraden können bei Verwendung der Glaskeramik als Kochfläche weiße Leuchtanzeigen verwendet werden. Gleichzeitig ist die Sichtbarkeit der im Innenraum des Kochgerätes vorhandenen Bauteile sehr stark reduziert.

$Nd_2O_3$ kann ebenfalls zur Färbung eingesetzt werden. Es unterscheidet sich von den übrigen Färbemitteln dadurch, dass es in der Glaskeramik relativ schmale Absorptionsbanden erzeugt. Diese Absorptionsbanden liegen überwiegend im grünen Spektralbereich. Mittels geringer Mengen an $Nd_2O_3$ ist es möglich, den Farbort von durch die Glaskeramik transmittiertem Licht fein einzustellen. So weisen beispielsweise Glaskeramiken, die als färbende Bestandteile ausschließlich geringe Mengen an $Fe_2O_3$ enthalten, häufig einen Gelbstich auf. Dies kann beispielsweise bei Glaskeramiken der Fall sein, die gleichzeitig $TiO_2$ und über Verunreinigung der Rohstoffe eingeschlepptes $Fe_2O_3$ enthalten. Wenn solche Glaskeramiken beispielsweise mit weißen Unterseitenbeschichtungen versehen werden, weisen diese Unterseitenbeschichtungen einen deutlich wahrnehmbaren Gelbstich auf. In solchen Glaskeramiken kann eine Zugabe von $Nd_2O_3$ dazu verwendet werden, um den Gelbstich zu reduzieren oder zu beheben, ohne den Lichttransmissionsgrad signifikant abzusenken. Dadurch wird die Herstellung von Kochflächen mit weißem Erscheinungsbild ermöglicht.

Vorzugsweise ist $Nd_2O_3$ in den Mengen 0 - 0,6 Gew.-% in der Glaskeramik enthalten. Da $Nd_2O_3$ relativ teuer ist, sollte die Menge auf 0,6 Gew.-% beschränkt werden. Besonders bevorzugt enthält die Glaskeramik 0,005 - 0,5 Gew.-%, 0,01 - 0,4 Gew.-%, 0,02 - 0,3 Gew.-%, 0,03 - 0,2 Gew.-% oder sogar 0,04 - 0,1 Gew.-% $Nd_2O_3$.

$Fe_2O_3$ wirkt sich nicht nur im sichtbaren Spektralbereich auf die Transmission aus, sondern auch im Nahinfraroten bis ca. 3 $\mu$m Wellenlänge. Damit hat $Fe_2O_3$ nicht nur einen Einfluss auf die Erzielbarkeit bestimmter Farben oder die Darstellbarkeit von Farbanzeigen. Die Absorption im Nahinfraroten bestimmt, wieviel Wärmeenergie die Glasschmelze in der Wanne absorbieren kann. Sie bestimmt darüber, wie viel Heizleistung von Strahlungsheizelementen durch die Glaskeramik hindurchtreten kann. Ferner bestimmt sie, ob und welche Infrarotsensoren in einem Kochfeld verwendet werden können. Solche Sensoren können beispielsweise als optische Berührungssensoren oder als Infrarot-Empfänger für Kabellose Datenübertragung ausgebildet sein. Gleichzeitig ist $Fe_2O_3$ häufig als Verunreinigung in den für die Herstellung verwendeten Rohstoffen enthalten. Eine höhere Menge an $Fe_2O_3$ in der Glaskeramik ermöglicht es, kostengünstigere Rohstoffe mit höheren Mengen an Verunreinigungen einzusetzen. Dies alles ist bei der Wahl der geeigneten Menge an $Fe_2O_3$ zu beachten. Die Mengen von $Fe_2O_3$ sollten vorzugsweise 0 - 0,4 Gew.-% betragen. Glaskeramiken, die mehr als 0,4 Gew.-% $Fe_2O_3$ enthalten, sind aufgrund der niedrigen Transmission im Nahinfraroten nicht mit handelsüblichen Strahlungsheizelementen für Kochgeräte kompatibel. Vorzugsweise enthalten die Glaskeramiken 0,005 - 0,3 Gew.-%, 0,01 - 0,25 Gew.-%, 0,02 - 0,2 Gew.-% oder sogar 0,04 - 0,18 Gew.-% $Fe_2O_3$. Solche Glaskeramiken können kostengünstig hergestellt werden und sind gleichzeitig mit Strahlungsheizelementen und optischen Sensoren für Kochgeräte kompatibel. $Fe_2O_3$ ist häufig als Verunreinigung in Rohstoffen zur Glasherstellung enthalten, beispielsweise in Spodumen.

CoO kann beispielsweise in Mengen von 0 - 0,5 Gew.-% in der Glaskeramik enthalten sein. Vorzugsweise ist es in Mengen von 0,01 - 0,2 Gew.-%, bevorzugt 0,02 - 0,08 Gew.-%, besonders bevorzugt 0,04 - 0,06 Gew.-% enthalten.

Vorzugsweise enthalten Glaskeramiken, die mittels 0,02 - 0,1 Gew.-% CoO gefärbt sind, zusätzlich 0,02 - 0,1 Gew.-% $Cr_2O_3$. Besonders bevorzugt enthalten sie zusätzlich 0,05-0,25 Gew.-% $Fe_2O_3$ und insbesondere < 30 ppm $V_2O_5$. Mit diesen Mengen an CoO und bevorzugten weiteren Färbern ist es möglich, den Lichttransmissionsgrad der Glaskeramik bezogen auf eine Dicke von 4 mm im Bereich 0,1 bis 80 % einzustellen. Weiterhin ist es damit möglich, weiße Anzeigen im warmweißen Spektralbereich zu ermöglichen.

$Cr_2O_3$, NiO, CuO und MnO werden in der Regel zur unterstützenden Färbung eingesetzt, jedoch anders als $V_2O_5$, MoOs oder CoO nur selten als Hauptfärbemittel. Unter einem Hauptfärbemittel wird dabei die färbende Komponente verstanden, die den größten Einfluss auf die Transmission der Glaskeramik im sichtbaren Spektralbereich ausübt. Sie kommen häufig als Verunreinigung in Rohstoffen vor. Diese Bestandteile sind vorzugsweise jeweils in Mengen von 0 bis 0,5 Gew.-% in der Glaskeramik enthalten. Besonders bevorzugt sind sie in Mengen von 0,001 - 0,4 Gew.-%, 0,002 - 0,3 Gew.-%, 0,004 - 0,2 Gew.-%, 0,006 - 0,1 Gew.-%, 0,008 - 0,08 Gew.-% oder sogar 0,01 - 0,05 Gew.-% in der Glaskeramik enthalten.

In einer bevorzugten Ausführungsform enthält die Glaskeramik 0 bis 0,1 Gew.-% $V_2O_5$. oder 0 bis 0,5 Gew.-% $MoO_3$ oder 0 bis 0,6 Gew.-% $Nd_2O_3$ oder 0 bis 0,4 Gew.-% $Fe_2O_3$ oder 0 bis 0,5 Gew.-% CoO oder 0 bis 0,5 Gew.-% $Cr_2O_3$ oder 0 bis 0,5 Gew.-% NiO oder 0 bis 0,5 Gew.-% CuO oder 0 bis 0,5 Gew.-% MnO oder Kombinationen dieser Bestandteile.

Neben der färbenden Wirkung können diese Komponenten auch einen positiven Einfluss auf die Glasqualität haben. Dies ist insbesondere für die Komponenten der Fall, die in der Glasschmelze im infraroten Spektralbereich absorbieren. Durch die Absorption im Infraroten kann die von Heizeinrichtungen in die Schmelzwanne eingebrachte Wärme effizienter von der Glasschmelze aufgenommen werden. Dies kann bei gleicher Energiezufuhr dazu führen, dass die Temperatur der Glasschmelze erhöht wird. Dies kann sich sowohl positiv auf das Einschmelzen schlecht schmelzender Rohstoffe als auch auf die Reduzierung von Blasen während der Läuterung auswirken. Dies ist insbesondere für $Fe_2O_3$, CoO und NiO in den oben genannten Mengen der Fall.

In einer Weiterbildung der Erfindung weist die Glaskeramik bezogen auf eine Dicke von 4 mm einen Lichttransmissionsgrad von 80 - 90 % oder 81 - 89 % oder 82 - 88 % oder sogar 83 - 87 % auf. Glaskeramiken mit einem solchen Lichttransmissionsgrad weisen vorzugsweise eine Buntheit C* in Transmission bezogen auf eine Dicke von 4 mm im Bereich von 0 - 6, bevorzugt 1,5 - 5 besonders bevorzugt 3,0 - 4,6 auf.

Dabei bedeutet "bezogen auf eine Dicke von 4 mm", dass die entsprechenden Eigenschaften entweder an einer Probe mit einer Materialstärke von 4 mm bestimmt werden oder bei einer andere Materialstärke bestimmt und auf eine Materialstärke von 4 mm umgerechnet werden. Bei Transmissionsangaben kann die Umrechnung mittels des Lambert-Beer-Gesetzes erfolgen.

Der Lichttransmissionsgrad wird im Wellenlängenbereich 380 - 780 nm unter Verwendung von Licht der Normlichtart D65 gemäß den Vorgaben von DIN 5033 bestimmt. Dieser Wert entspricht der Helligkeit Y im CIExyY-Farbraum.

Die Buntheit C* wird gemäß der folgenden Formel aus den L*a*b*-Farbkoordinaten bestimmt:

$$C^* = \sqrt{(a^*)^2 + (b^*)^2}.$$

Die Farbkoordinaten a* und b* werden in bekannter Weise aus dem Transmissionsspektrum der Glaskeramik unter Verwendung von Normlicht der Normlichtart D65 bestimmt.

Glaskeramiken mit einem Lichttransmissionsgrad von 80 -90 % bezogen auf eine Dicke von 4 mm sind besonders dafür geeignet, als Kaminsichtscheibe oder als Kochplatte verwendet zu werden. In Kaminen bewirkt diese Transmission, dass das Feuer besonders gut sichtbar ist. In Kochgeräten ermöglicht diese Transmission beispielsweise, dass Leuchtanzeigen mit relativ geringer Leuchtdichte wie beispielsweise LCD- oder OLED-Anzeigen besonders gut sichtbar sind.

Die Buntheit C* von 0 - 6 bewirkt, dass die Farbe von Licht bei Durchtritt durch die Glaskeramik nur sehr geringfügig verändert wird. Dadurch wird es beispielsweise möglich, die Glaskeramik mit einer weißen Beschichtung zu versehen, die auch durch die Glaskeramik hindurch betrachtet noch einen weißen Farbeindruck erzeugt. Dies ist beispielsweise bei der Verwendung als Kochfläche oder Kaminsichtscheibe von besonderer Bedeutung. Glaskeramiken in diesen Verwendungen sind häufig 4 mm dick. Licht, dass an einer rückseitigen Beschichtung reflektiert wird, durchläuft demnach eine optische Wegstrecke von 8 mm, so dass sich Farbverschiebungen durch eine Eigenfarbe der Glaskeramik stärker auswirken als bei kürzeren Wegstrecken. Für Kochflächen oder Kaminsichtscheiben mit einer weißen Beschichtung auf der Rückseite ist eine entsprechend geringe Buntheit deshalb besonders vorteilhaft.

In einer Weiterbildung der Erfindung enthält eine Glaskeramik mit einem Lichttransmissionsgrad von 80 - 90 % oder einem entsprechend bevorzugten Bereich und einer Buntheit C* von 2-6 oder einem entsprechend bevorzugten Bereich neben der erfindungsgemäßen Zusammensetzung noch eine oder mehrere der folgenden Komponenten in Gew.-%:

$Nd_2O_3$ 0,005 - 0,1, bevorzugt 0,01 - 0,08, besonders bevorzugt 0,03 - 0,065,
$Fe_2O_3$ 0 - 0,02, bevorzugt 0,0025 - 0,018, besonders bevorzugt 0,005 - 0,016,
$V_2O_5$ 0 - 0,0015, bevorzugt 0 - 0,001, besonders bevorzugt 0 - 0,0005,
$Cr_2O_3$ 0 - 0,001, bevorzugt 0 - 0,0005, besonders bevorzugt 0 - 0,0003,
MoOs 0 - 0,001, bevorzugt 0 - 0,0008, besonders bevorzugt 0 - 0,0006,
CoO 0 - 0,001, bevorzugt 0 - 0,0005, besonders bevorzugt 0 - 0,0001,
NiO 0 - 0,001, bevorzugt 0 - 0,0005, besonders bevorzugt 0 - 0,0001,
CuO 0 - 0,001, bevorzugt 0 - 0,0007, besonders bevorzugt 0 - 0,0002,
MnO 0 - 0,02, bevorzugt 0 - 0,01, besonders bevorzugt 0 - 0,006,
$TiO_2$ 1,6 - 2,5, bevorzugt 2,0 - 2,4, besonders bevorzugt 2,1 - 2,3,
$ZrO_2$ 0 - 2,2 oder 0,1 - 2,0 oder 0,2 - 1,8 oder sogar 0,3 - 1,6,

$SnO_2$ 0,05 - 0,2, bevorzugt 0,08 - 0,18, besonders bevorzugt 0,1 - 0,15.

In einer besonders bevorzugten Weiterbildung enthält die Glaskeramik alle diese Komponenten in diesen Mengen. Wenn diese Komponenten in den hier genannten Mengen in der Glaskeramik enthalten sind, kann es weiter bevorzugt sein, wenn die Summe $Fe_2O_3$ + $V_2O_5$ + $Cr_2O_3$ 0 - 0,0225 Gew.-%, bevorzugt 0,0005 - 0,0175 Gew.-%, besonders bevorzugt 0,0010 -0,0170 Gew.-% beträgt.

Diese Komponenten haben sowohl einzeln als auch in Kombination miteinander einen Einfluss auf den Lichttransmissionsgrad und die Buntheit der Glaskeramik. Wenn die oben genannten Mengen eingehalten werden, ist es möglich den Lichttransmissionsgrad und die Buntheit in den oben genannten Grenzen fein zu justieren.

Die folgende Tabelle enthält drei weitere Weiterbildungen der erfindungsgemäßen Glaskeramik in Gew.-% auf Oxidbasis:

|  | bevorzugt | besonders bevorzugt | am meisten bevorzugt |
|---|---|---|---|
| $Li_2O$ | 1 - <2,9 | 1,1-2,8 | 1,2-2,7 |
| $Na_2O$ | >0,05 - <0,5 | 0,1 - 0,4 | 0,2 - 0,3 |
| $K_2O$ | >0,05 - <0,6 | 0,1 - 0,5 | 0,2 - 0,4 |
| $MgO$ | 0-<1 | 0 - <0,6 | 0,05 - 0,4 |
| $CaO$ | 0-2 | 0,2-1,6 | 0,3-1,4 |
| $SrO$ | 0-2 | 0,2-1,6 | 0,3-1,4 |
| $BaO$ | 0-4 | 0,3 - 3,5 | 0,6 - 3,0 |
| $ZnO$ | 0 - 6,0 | >1,7 - 6,0 | 2,0 - 5,5 |
| $Al_2O_3$ | 17-25 | 17-23 | 17-21 |
| $SiO_2$ | 60-70 | 61 - 69 | 62-68 |
| $TiO_2$ | 1,0 - <4,2 | 2,0 - 4,1 | >3,0 - 4,0 |
| $ZrO_2$ | 1,0-4,0 | >1,3 - 3,8 | >1,7 - 3,2 |
| $SnO_2$ | 0 - <1,0 | 0,15 - 0,8 | 0,2-0,6 |
| $Fe_2O_3$ | 0-0,4 | 0,005 - 0,3 | 0,01 - 0,25 |
| $V_2O_5$ | 0-0,1 | 0-0,1 | 0-0,1 |
| $MoO_3$ | 0-0,5 | 0-0,5 | 0-0,5 |
| $Cr_2O_3$ | 0-0,5 | 0-0,5 | 0-0,5 |
| $Nd_2O_3$ | 0-0,6 | 0-0,6 | 0-0,6 |
| $CoO$ | 0-0,5 | 0-0,5 | 0-0,5 |
| $NiO$ | 0-0,5 | 0-0,5 | 0-0,5 |
| $CuO$ | 0-0,5 | 0-0,5 | 0-0,5 |
| $MnO_2$ | 0-0,5 | 0-0,5 | 0-0,5 |
| $P_2O_5$ | 0-5 | 0,01-4 | 0,05-3 |

Verwendung findet die erfindungsgemäße Glaskeramik als Kochfläche, Kaminsichtscheibe, Grill- oder Bratfläche, Abdeckung von Brennelementen in Gasgrills, Backofensichtscheibe, insbesondere für Pyrolyseherde, Arbeits- oder Tischplatte in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.

Die erfindungsgemäße Glaskeramik kann insbesondere als Kochfläche eingesetzt werden. Die Kochfläche kann dabei an der Oberseite und/oder der Unterseite ganz oder teilweise mit einem Dekor oder einer funktionellen Beschichtung versehen sein. Ebenso können auf der Unterseite Berührungssensoren zur Bedienung der Kochfläche vorgesehen sein. Dies können beispielsweise aufgedruckte, aufgeklebte oder angedrückte kapazitive Sensoren sein.

Weiterhin kann die Glaskeramik auch in Form dreidimensional geformter Platten vorliegen. Das heißt, die Platten können abgewinkelt oder gewölbt sein oder zum Beispiel einen als Wok ausgeformten Bereich enthalten. Auch Aussparungen, beispielsweise für den Betrieb von Gasbrennern, sind möglich.

Im Folgenden wird die Erfindung anhand von Ausführungsbeispielen weiter veranschaulicht.

Die kristallisierbaren Grüngläser der Ausführungsbeispiele wurden aus in der Glasindustrie üblichen technischen Gemengerohstoffen bei Temperaturen von 1680°C, 4 Stunden eingeschmolzen. Mit dieser Wahl lassen sich die Forderungen nach wirtschaftlichen Rohstoffen und einem geringen Verunreinigungsgehalt an unerwünschten Verunreinigungen vereinbaren. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1600 °C, 90 Minuten durch Rühren homogenisiert. Nach dieser Homogenisierung wurden die Gläser für 3 Stunden bei 1640 °C geläutert. Anschließend wurden Stücke von ca. $120 \times 140 \times 30 \text{ mm}^3$ Größe gegossen und in einem Kühlofen beginnend, abhängig von der jeweiligen Viskosität des Glases, ab 640 - 670 °C mit 30 K/h auf Raumtemperatur abgekühlt, um Spannungen abzubauen. Die Gussstücke wurden in die für die Untersuchungen und für die Keramisierung benötigten Größen unterteilt.

Die Keramisierung der Proben im Grünglaszustand ist mit einem Keramisierungsverfahren in einem Durchlaufofen mit den folgenden Schritten erfolgt:

a) Aufheizen von Raumtemperatur auf 740 °C mit einer Heizrate von 30 K/min.,
b) Halten bei 740 °C für 3 min. und 20 s,
c) Temperaturerhöhung von 740 auf 810 °C mit einer Heizrate von 28 K/min.,
d) Halten auf 810 °C für 9 min. und 20 s,
e) Temperaturerhöhung von 810 °C bis 930 °C mit einer Heizrate von 21 K/min.,
f) Halten bei 930 °C für 6 min.,
g) Abkühlen auf Raumtemperatur mit einer Kühlrate von 15 K/min.

Die nachfolgenden Tabellen enthalten die Zusammensetzung und Materialeigenschaften der erfindungsgemäßen Beispiele.

Der thermische Ausdehnungskoeffizient CTE wurde an stabförmigen Proben dynamisch mittels eines Schubstangen-Dilatometers bei einer Heizrate von 2 K/min bestimmt.

Zur Messung der oberen Entglasungstemperatur (OEG) wurden die Grüngläser in Pt/Rh10-Tiegeln geschmolzen. Anschließend wurden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG.

Der Verarbeitungspunkt (T4) der Grüngläser wurde mit einem Rührviskosimeter gemäß DIN ISO 7884-2 bestimmt.

Bei der Umwandlung des Grünglases in die Glaskeramik steigt die Dichte an, da die Kristallphase eine höhere Dichte als das amorphe Glas hat. Der Schrumpf gibt die lineare Längenänderung bei der Umwandlung des Grünglases in die Glaskeramik an. Er wird wie folgt aus der Dichte des Grünglases und der Dichte der Glaskeramik berechnet:

$$Schrumpf = 1 - \left(\frac{Dichte_{Grünglas}}{Dichte_{Glaskeramik}}\right)^{\frac{1}{3}}.$$

Tg gibt die Transformationstemperatur, auch als Glasübergangstemperatur bekannt, der Grüngläser an. Sie wird dilatometrisch bestimmt.

Der Lichttransmissionsgrad wird im Wellenlängenbereich 380 - 780 nm unter Verwendung von Licht der Normlichtart D65 gemäß den Vorgaben von DIN 5033 bestimmt. Dieser Wert entspricht der Helligkeit Y im CIExyY-Farbraum. Der Wert ist ein Maß für das Helligkeitsempfinden des menschlichen Auges.

Aus den xy-Farbkoordinaten des CIExyY-Farbraums wurde der Abstand d zum Farbort von Normlicht der Normlichtart D65 (0,3127/0,3290) wie folgt bestimmt:

$$d = \sqrt{(x - 0,3127)^2 + (y - 0,3290)^2}.$$

Transmissionsspektren wurden gemäß ISO 15368:2021 bestimmt. Tabelle 2 enthält exemplarisch die spektralen Transmissionsgrade "T@ ..." für die Wellenlängen 470 nm, 600 nm, 630 nm, 700 nm, 950 nm und 1600 nm.

Die Farbkoordinaten im CIExyY-Farbraum und im Lab-Farbraum wurden gemäß den Vorgaben der CIE 1932 mit einem 8° Beobachter und Licht der Normlichtart D65 in Transmission bestimmt.

Alle Transmissionsmessungen wurden an 4 mm dicken, beidseitig glatten Proben durchgeführt.

Der Volumenanteil "XRD Anteil HQMK" beziehungsweise "KMK" und die Kristallitgröße der kristallinen Phasen "XRD Kristallitgröße HQMK" beziehungsweise "KMK" wurden mittels Rietveld-Analyse aus Röntgenbeugungsspektren bestimmt.

| Bsp | 1 | 2 | 3 | 4 | 5 | 6 | 7 | 8 | 9 |
|---|---|---|---|---|---|---|---|---|---|
| $Li_2O$ | 1,880 | 2,780 | 2,600 | 2,610 | 2,700 | 2,710 | 2,870 | 2,780 | 2,860 |
| $Na_2O$ | 0,463 | 0,274 | 0,384 | 0,410 | 0,284 | 0,272 | 0,394 | 0,288 | 0,288 |
| $K_2O$ | 0,505 | 0,452 | 0,279 | 0,276 | 0,333 | 0,314 | 0,287 | 0,314 | 0,319 |
| MgO | 0,200 | 0,198 | 0,100 | 0,099 | 0,099 | 0,096 | 0,102 | 0,098 | 0,094 |
| CaO | 0,786 | 0,813 | 0,775 | 0,916 | 0,841 | 0,897 | 0,710 | 0,769 | 0,709 |
| SrO | 0,009 | 0,017 | 0,019 | 0,000 | 0,012 | 0,013 | 0,023 | 0,018 | 0,023 |
| BaO | 0,910 | 1,720 | 2,020 | 2,050 | 1,270 | 1,360 | 2,500 | 1,940 | 2,500 |
| ZnO | 3,890 | 2,510 | 2,240 | 2,510 | 2,490 | 2,390 | 2,030 | 2,030 | 2,000 |
| $Al_2O_3$ | 19,840 | 21,330 | 21,462 | 21,400 | 21,550 | 21,400 | 21,440 | 21,340 | 21,180 |
| $SiO_2$ | 66,400 | 64,799 | 65,006 | 64,600 | 65,300 | 65,400 | 64,600 | 65,300 | 64,900 |
| $TiO_2$ | 3,160 | 3,180 | 3,190 | 3,180 | 3,190 | 3,170 | 3,180 | 3,160 | 3,170 |
| $ZrO_2$ | 1,388 | 1,396 | 1,399 | 1,390 | 1,400 | 1,392 | 1,390 | 1,401 | 1,392 |
| $SnO_2$ | 0,262 | 0,279 | 0,281 | 0,282 | 0,277 | 0,278 | 0,285 | 0,280 | 0,275 |
| $Fe_2O_3$ | 0,091 | 0,091 | 0,090 | 0,094 | 0,090 | 0,115 | 0,093 | 0,116 | 0,120 |
| $V_2O_5$ | 0,023 | 0,026 | 0,027 | 0,029 | 0,024 | 0,050 | 0,026 | 0,052 | 0,056 |
| $Cr_2O_3$ | 0,005 | 0,004 | 0,003 | 0,005 | 0,005 | 0,005 | 0,004 | 0,005 | 0,005 |
| $MnO_2$ | 0,012 | 0,017 | 0,016 | 0,018 | 0,017 | 0,018 | 0,019 | 0,018 | 0,019 |
| $P_2O_5$ | 0,065 | 0,072 | 0,067 | 0,070 | 0,067 | 0,071 | 0,077 | 0,073 | 0,074 |

Tabelle 1: Zusammensetzungen erfindungsgemäßer Beispiele

| Bsp | 10 | 11 | 12 | 13 | 14 | 15 | 16 | 17 | 18 |
|---|---|---|---|---|---|---|---|---|---|
| $Li_2O$ | 1,870 | 1,900 | 1,670 | 1,690 | 1,890 | 1,910 | 1,900 | 1,900 | 2,180 |
| $Na_2O$ | 0,400 | 0,387 | 0,380 | 0,384 | 0,281 | 0,269 | 0,154 | 0,200 | 0,395 |
| $K_2O$ | 0,410 | 0,408 | 0,410 | 0,410 | 0,313 | 0,408 | 0,419 | 0,222 | 0,491 |
| $MgO$ | 0,775 | 0,770 | 0,711 | 0,708 | 0,620 | 0,134 | 0,940 | 0,727 | 0,190 |
| $CaO$ | 0,916 | 0,910 | 1,020 | 1,010 | 0,813 | 1,210 | 1,692 | 0,910 | 0,910 |
| $SrO$ | 0,024 | 0,024 | 0,024 | 0,024 | 0,024 | 0,025 | 0,013 | 0,023 | 0,024 |
| $BaO$ | 2,500 | 2,480 | 2,520 | 2,510 | 2,520 | 2,620 | 1,390 | 2,530 | 2,520 |
| $ZnO$ | 2,180 | 2,190 | 2,470 | 2,490 | 2,480 | 2,200 | 2,870 | 2,010 | 2,000 |
| $Al_2O_3$ | 20,500 | 20,390 | 20,070 | 19,990 | 20,080 | 21,120 | 19,370 | 20,530 | 21,370 |
| $SiO_2$ | 65,400 | 65,500 | 65,600 | 65,700 | 65,900 | 65,000 | 66,100 | 65,800 | 64,800 |
| $TiO_2$ | 3,180 | 3,180 | 3,210 | 3,220 | 3,190 | 3,150 | 3,200 | 3,240 | 3,180 |
| $ZrO_2$ | 1,390 | 1,401 | 1,400 | 1,401 | 1,400 | 1,398 | 1,393 | 1,403 | 1,403 |
| $SnO_2$ | 0,278 | 0,275 | 0,277 | 0,275 | 0,277 | 0,274 | 0,261 | 0,271 | 0,275 |
| $Fe_2O_3$ | 0,094 | 0,092 | 0,091 | 0,091 | 0,091 | 0,118 | 0,118 | 0,091 | 0,090 |
| $V_2O_5$ | 0,028 | 0,028 | 0,028 | 0,029 | 0,030 | 0,056 | 0,064 | 0,029 | 0,029 |
| $Cr_2O_3$ | 0,005 | 0,005 | 0,005 | 0,005 | 0,005 | 0,003 | 0,000 | 0,005 | 0,005 |
| $MnO_2$ | 0,013 | 0,013 | 0,012 | 0,011 | 0,012 | 0,013 | 0,013 | 0,013 | 0,014 |
| $P_2O_5$ | 0,064 | 0,062 | 0,062 | 0,062 | 0,058 | 0,060 | 0,062 | 0,061 | 0,065 |

Fortsetzung Tabelle 1

| Bsp | 1 | 2 | 3 | 4 | 5 | 6 | 7 |
|---|---|---|---|---|---|---|---|
| T4[°C] | | | | | | 1323 | |
| OEG [°C] | | | | | | | |
| Dichte Glas [g/cm³] | 2,489 | 2,492 | 2,490 | 2,499 | 2,481 | 2,483 | 2,483 |
| CTE_Glaskeramik [ppm/K] | 0,83 | 0,30 | 0,42 | 0,40 | 0,22 | 0,33 | 0,28 |
| Schrumpf [%] | 1,39 | 1,14 | 1,22 | 1,16 | 1,31 | 1,34 | 1,27 |
| Dichte GK [g/cm³] | 2,60 | 2,58 | 2,58 | 2,59 | 2,58 | 2,59 | 2,58 |
| XRD Anteil HQMK | 53 | 59 | 57 | 56 | 63 | 60 | 58 |
| XRD Kristallit-größe HQMK | 44 | 37 | 37 | 38 | 36 | 34 | 39 |
| XRD Anteil KMK | 0 | 0 | 0 | 0 | 0 | 0 | 0 |
| Transmission 4mm | | | | | | | |
| x (CIE) | 0,571 | 0,532 | 0,524 | 0,539 | 0,529 | 0,613 | 0,516 |
| y (CIE) | 0,391 | 0,389 | 0,395 | 0,392 | 0,395 | 0,368 | 0,392 |
| Y(CIE) / tvis | 3,896 | 4,765 | 6,648 | 4,709 | 6,527 | 1,507 | 5,885 |
| $d=\sqrt{(x-0.3127)^2 + (y-0.3290)^2}$ | 0,266 | 0,227 | 0,221 | 0,235 | 0,226 | 0,303 | 0,213 |
| T@ 470 nm | 0,004 | 0,010 | 0,014 | 0,008 | 0,013 | 0,001 | 0,014 |
| T@ 600 nm | 0,070 | 0,080 | 0,111 | 0,080 | 0,110 | 0,028 | 0,097 |
| T@ 630 nm | 0,123 | 0,132 | 0,173 | 0,132 | 0,173 | 0,059 | 0,151 |
| T@ 700 nm | 0,308 | 0,316 | 0,372 | 0,315 | 0,377 | 0,209 | 0,333 |
| T@ 950 nm | 0,721 | 0,751 | 0,759 | 0,733 | 0,765 | 0,687 | 0,727 |
| T@ 1600 nm | 0,732 | 0,746 | 0,744 | 0,729 | 0,743 | 0,694 | 0,721 |

Tabelle 2: Materialeigenschaften erfindungsgemäßer Beispiele

| Bsp | 8 | 9 | 10 | 11 | 12 | 13 | 14 |
|---|---|---|---|---|---|---|---|
| T4[°C] | 1326 | 1320 | | | | | |
| OEG [°C] | | | | | | | |
| Dichte Glas [g/cm³] | 2,484 | 2,494 | 2,490 | 2,500 | 2,504 | 2,504 | 2,498 |
| CTE_Glaskeramik [ppm/K] | 0,24 | 0,25 | 1,35 | 1,36 | 1,44 | 1,44 | 1,12 |
| Schrumpf [%] | 1,23 | 1,12 | 1,20 | 1,20 | 1,21 | 1,20 | 1,31 |
| Dichte GK [g/cm³] | 2,58 | 2,58 | 2,58 | 2,59 | 2,60 | 2,60 | 2,60 |
| XRD Anteil HQMK | 61 | 59 | 50 | 49 | 47 | 47 | 52 |
| XRD Kristallit-größe HQMK | 36 | 37 | 50 | 48 | 50 | 55 | 44 |
| XRD Anteil KMK | 0 | 0 | 0 | 0 | 0 | 0 | 0 |
| Transmission 4mm | | | | | | | |
| x (CIE) | 0,604 | 0,608 | 0,544 | 0,537 | 0,556 | 0,561 | 0,548 |
| y (CIE) | 0,373 | 0,369 | 0,395 | 0,395 | 0,392 | 0,393 | 0,393 |
| Y(CIE) / tvis | 1,745 | 1,384 | 4,171 | 5,005 | 3,609 | 3,522 | 4,530 |
| $d=sqrt((x-0.3127)^2 + (y-0,3290)^2)$ | 0,294 | 0,298 | 0,241 | 0,234 | 0,251 | 0,257 | 0,244 |
| T@ 470 nm | 0,001 | 0,001 | 0,007 | 0,009 | 0,005 | 0,004 | 0,007 |
| T@ 600 nm | 0,032 | 0,025 | 0,071 | 0,085 | 0,063 | 0,062 | 0,078 |
| T@ 630 nm | 0,066 | 0,053 | 0,118 | 0,137 | 0,107 | 0,106 | 0,131 |
| T@ 700 nm | 0,218 | 0,191 | 0,281 | 0,317 | 0,272 | 0,269 | 0,313 |
| T@ 950 nm | 0,682 | 0,666 | 0,671 | 0,725 | 0,694 | 0,693 | 0,727 |
| T@ 1600 nm | 0,689 | 0,687 | 0,688 | 0,729 | 0,713 | 0,729 | 0,724 |

Fortsetzung Tabelle 2

| Bsp | 15 | 16 | 17 | 18 |
|---|---|---|---|---|
| T4[°C] | | 1327 | | |
| OEG [°C] | | | | |
| Dichte Glas [g/cm³] | 2,504 | 2,500 | 2,497 | 2,497 |
| CTE_Glaskeramik [ppm/K] | 1,26 | 1,10 | 1,20 | 1,01 |
| Schrumpf [%] | 1,23 | 1,21 | 1,37 | 1,15 |
| Dichte GK [g/cm³] | 2,60 | 2,59 | 2,60 | 2,59 |
| XRD Anteil HQMK | 46 | 54 | 51 | 48 |
| XRD Kristallitgröße HQMK | 41 | 46 | 46 | 46 |
| XRD Anteil KMK | 0 | 0 | | |
| Transmission 4mm | | | | |
| x (CIE) | 0,620 | 0,672 | 0,543 | 0,540 |
| y (CIE) | 0,371 | 0,327 | 0,397 | 0,403 |
| Y(CIE) / tvis | 1,276 | 0,134 | 5,041 | 6,180 |
| $d=\sqrt{(x-0.3127)^2 + (y-0,3290)^2}$ | 0,310 | 0,359 | 0,240 | 0,239 |
| T@ 470 nm | 0,000 | 0,000 | 0,008 | 0,009 |
| T@ 600 nm | 0,024 | 0,002 | 0,086 | 0,106 |
| T@ 630 nm | 0,050 | 0,007 | 0,140 | 0,166 |
| T@ 700 nm | 0,167 | 0,056 | 0,323 | 0,351 |
| T@ 950 nm | 0,558 | 0,567 | 0,723 | 0,716 |
| T@ 1600 nm | 0,667 | 0,668 | 0,719 | 0,738 |

Fortsetzung Tabelle 2

**Patentansprüche**

1. Lithiumaluminiumsilikat-Glaskeramik

   mit einem thermischen Ausdehnungskoeffizienten im Bereich von 20°C bis 700°C von -0,5 bis 1,9 ppm/K und mit einer Zusammensetzung enthaltend in Gew.-% auf Oxidbasis
   $SiO_2$ 60 - 70
   $Al_2O_3$ 17 - 25
   $Li_2O$ 1 - <2,9
   MgO 0-<1
   $Na_2O$ >0,05 - <0,5
   $K_2O$ >0,05 - <0,6.

2. Lithiumaluminiumsilikat-Glaskeramik nach Anspruch 1, **dadurch gekennzeichnet, dass** sie 1,1 - 2,8 Gew.0,-% oder 1,2 - 2,7 Gew.-% oder 1,3 - 2,6 Gew.-% oder 1,4 - 2,5 Gew.-% $Li_2O$ enthält.

3. Lithiumaluminiumsilikat-Glaskeramik nach einem der vorhergehenden Ansprüche, **dadurch gekennzeichnet, dass** sie >1,7 - 6,0 Gew.-% oder 2,0 - 5,5 Gew.-% oder 2,5 - 5,0 Gew.-% oder 3,0 - 4,0 Gew.-% ZnO enthält.

4. Lithiumaluminiumsilikat-Glaskeramik nach Anspruch 1, **dadurch gekennzeichnet, dass** die Differenz zwischen $Li_2O$ und ZnO $\pm$0,5 Gew.-% oder $\pm$0,3 Gew.-% oder sogar $\pm$0,2 Gew.-% beträgt.

5. Lithiumaluminiumsilikat-Glaskeramik nach Anspruch 1, **dadurch gekennzeichnet, dass** sie 1,0 - <4,2 Gew.-%, bevorzugt 2,0 - 4,1 Gew.-%, besonders bevorzugt >3,0 - 4,0 % $TiO_2$ enthält.

6. Lithiumaluminiumsilikat-Glaskeramik nach einem der vorhergehenden Ansprüche, **dadurch gekennzeichnet, dass** das Verhältnis von $SiO_2$ zu $Al_2O_3$ in Gew.-%, $SiO_2/Al_2O_3$, in der Glaskeramik kleiner als 3,5, bevorzugt kleiner als 3,3, besonders bevorzugt kleiner als 3,15 und größer als 2,4, bevorzugt größer als 3,0, besonders bevorzugt größer als 3,1 ist.

7. Lithiumaluminiumsilikat-Glaskeramik nach einem der vorhergehenden Ansprüche, **dadurch gekennzeichnet, dass** sie 0,1 - <1,0 Gew.-% $SnO_2$, vorzugsweise 0,15 - 0,8 Gew.-%, besonders bevorzugt 0,2 - 0,6 Gew.-% $SnO_2$ enthält.

8. Lithiumaluminiumsilikat-Glaskeramik nach einem der vorhergehenden Ansprüche, **dadurch gekennzeichnet, dass** sie 0 - <0,8 Gew.-%, 0 - <0,6 Gew.-%, 0 - <0,5 Gew.-%, 0,05 - <0,4 Gew.-% oder 0,1 - <0,3 Gew.-% MgO enthält.

9. Lithiumaluminiumsilikat-Glaskeramik nach einem der vorhergehenden Ansprüche, **dadurch gekennzeichnet, dass** die Glaskeramik weniger MgO als $K_2O$ und/oder weniger MgO als $Na_2O$ enthält.

10. Lithiumaluminiumsilikat-Glaskeramik nach einem der vorhergehenden Ansprüche, **dadurch gekennzeichnet, dass** das Verhältnis $K_2O/Na_2O$ in Gew.-% im Bereich 0,1 - 2, vorzugsweise 0,5 - 1,5, besonders bevorzugt 0,7 - 1,3 oder im Bereich 0,1 - <1, vorzugsweise 0,2 - 0,9, besonders bevorzugt 0,3 - 0,8 liegt oder im Bereich 1 - 2, vorzugsweise 1,1 - 1,9, besonders bevorzugt 1,2 - 1,8 liegt.

11. Lithiumaluminiumsilikat-Glaskeramik nach einem der vorhergehenden Ansprüche, **dadurch gekennzeichnet, dass** sie 1,0 - 4,0 Gew.-%, vorzugsweise >1,3 - 3,9 Gew.-%, besonders bevorzugt >1,7 - 3,8 Gew.-% $ZrO_2$ enthält.

12. Lithiumaluminiumsilikat-Glaskeramik nach einem der vorhergehenden Ansprüche, **dadurch gekennzeichnet, dass** die Menge an $Na_2O$ + $K_2O$ wenigstens 0,2 Gew.-% und höchstens 1 Gew.-%, vorzugsweise wenigstens 0,3 Gew.-% oder wenigstens 0,4 Gew.-% oder wenigstens 0,5 Gew.-% und höchstens 1,0 Gew.-% oder höchstens 0,9 Gew.-% oder höchstens 0,8 Gew.-% oder höchstens 0,7 Gew.-% oder höchstens 0,6 Gew.-% beträgt.

13. Lithiumaluminiumsilikat-Glaskeramik nach einem der vorhergehenden Ansprüche, **dadurch gekennzeichnet, dass** sie weniger als 0,1 Gew.-% $As_2O_3$ und weniger als 0,1 Gew.-% $Sb_2O_3$ enthält.

14. Lithiumaluminiumsilikat-Glaskeramik nach einem der vorhergehenden Ansprüche, **dadurch gekennzeichnet, dass** sie 0 bis 0,1 Gew.-% $V_2O_5$. oder 0 bis 0,5 Gew.-% MoOs oder 0 bis 0,6 Gew.-% $Nd_2O_3$ oder 0 bis 0,4 Gew.- % $Fe_2O_3$ oder 0 bis 0,5 Gew.-% CoO oder 0 bis 0,5 Gew.-% $Cr_2O_3$ oder 0 bis 0,5 Gew.-% NiO oder 0 bis 0,5 Gew.-% CuO oder 0 bis 0,5 Gew.-% MnO oder Kombinationen dieser Bestandteile enthält.

15. Verwendung einer Glaskeramik nach einem der vorhergehenden Ansprüche als Kochfläche, Kaminsichtscheibe, Grill- oder Bratfläche, Abdeckung von Brennelementen in Gasgrills, Backofensichtscheibe, insbesondere für Pyrolyseherde, Arbeits- oder Tischplatte in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.

Europäisches
Patentamt

European
Patent Office

Office européen
des brevets

# EUROPÄISCHER RECHERCHENBERICHT

**Nummer der Anmeldung**

**EP 22 21 2392**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2021/224412 A1 (EUROKERA [FR]) 11. November 2021 (2021-11-11) * Absatz [0051]; Ansprüche; Beispiele * ----- | 1-15 | INV. C03C3/097 C03C10/12 |
| X | EP 3 882 223 A1 (NIPPON ELECTRIC GLASS CO [JP]) 22. September 2021 (2021-09-22) * Absatz [0063]; Ansprüche; Beispiele * ----- | 1,2,5-8, 10-15 | |
| X,D | US 2021/387899 A1 (FEVRE TIPHAINE [FR] ET AL) 16. Dezember 2021 (2021-12-16) * Absätze [0070], [0076]; Ansprüche; Beispiele * ----- | 1-15 | |
| A | JP H01 308845 A (NIPPON ELECTRIC GLASS CO) 13. Dezember 1989 (1989-12-13) * Ansprüche; Beispiele * ----- | 1-15 | |

**RECHERCHIERTE SACHGEBIETE (IPC)**

**C03C**

Der vorliegende Recherchenbericht wurde für alle Patentansprüche erstellt

| Recherchenort | Abschlußdatum der Recherche | Prüfer |
|---|---|---|
| **München** | **20. November 2023** | **Wrba, Jürgen** |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 21 2392

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2023

| Im Recherchenbericht angeführtes Patentdokument | Datum der Veröffentlichung | Mitglied(er) der Patentfamilie | | Datum der Veröffentlichung |
|---|---|---|---|---|
| WO 2021224412 A1 | 11-11-2021 | CN | 115551814 A | 30-12-2022 |
| | | EP | 4146605 A1 | 15-03-2023 |
| | | FR | 3109937 A1 | 12-11-2021 |
| | | JP | 2023534887 A | 15-08-2023 |
| | | KR | 20230006638 A | 10-01-2023 |
| | | US | 2023150860 A1 | 18-05-2023 |
| | | WO | 2021224412 A1 | 11-11-2021 |
| EP 3882223 A1 | 22-09-2021 | CN | 112969670 A | 15-06-2021 |
| | | EP | 3882223 A1 | 22-09-2021 |
| | | JP | WO2020100490 A1 | 30-09-2021 |
| | | US | 2021403370 A1 | 30-12-2021 |
| | | WO | 2020100490 A1 | 22-05-2020 |
| US 2021387899 A1 | 16-12-2021 | CN | 113015709 A | 22-06-2021 |
| | | EP | 3877343 A1 | 15-09-2021 |
| | | FR | 3088321 A1 | 15-05-2020 |
| | | JP | 2022511634 A | 01-02-2022 |
| | | KR | 20210091179 A | 21-07-2021 |
| | | US | 2021387899 A1 | 16-12-2021 |
| | | WO | 2020094734 A1 | 14-05-2020 |
| JP H01308845 A | 13-12-1989 | JP | 2602188 B2 | 23-04-1997 |
| | | JP | H01308845 A | 13-12-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012010341 A1
- EP 3502069 A1
- US 2017050880 A
- US 2020189965 A
- US 2020140322 A
- US 2021387899 A
- WO 2021224412 A1
- WO 11089220 A1
- US 8765619 B
- DE 102008050263 B4
- DE 102009013127 B4